# EUROPÄISCHE PATENTANMELDUNG

(11) **EP 3 534 286 A1**
(43) Veröffentlichungstag der Anmeldung: **04.09.2019**
(21) Anmeldenummer: 19160180.6
(22) Anmeldetag: 01.03.2019
(51) Int. Cl.: G06F 21/62, G06F 21/86, G06F 21/85, H05K 5/02, G06F 13/40

(54) **FUNKTIONSMODUL FÜR EINE ELEKTRONISCHE ZUGRIFFSKONTROLLE**

(30) Priorität: 03.03.2018 DE 102018001702
(71) Anmelder: Murrelektronik GmbH, 71570 Oppenweiler (DE)
(72) Erfinder: Wolff, Ingo, 74613 Öhringen (DE); Baier, Bastian, 71711 Murr (DE)
(74) Vertreter: Wasmuth, Rolf

(57) **Zusammenfassung**

Die Erfindung betrifft ein Funktionsmodul für eine elektronische Zugriffskontrolle auf ein Gehäuse (1) in elektrischen Anlagen. In dem Gehäuse (1) sind elektronische Einbaumodule (6) angeordnet. Zumindest eines der Einbaumodule (6) ist mit einem Datenbus (13) verbunden, wobei zum Austausch von Daten über eine Schnittstelle (14) und den Datenbus (13) auf das Einbaumodul (6) zugegriffen werden kann. Nach der Erfindung ist zwischen der Schnittstelle (14) und dem Datenbus (13) ein schaltbares Sperrmodul (20, 20a. 20b) vorgesehen, wobei das Sperrmodul (20, 20a. 20b) in einem Sperrzustand den Datenverkehr auf dem Datenbus (13) für zumindest einen Datenaustausch zwischen der Schnittstelle (14) und dem Einbaumodul (6) beschränkt oder unterbricht und in einem Freigabezustand den Datenbus (13) für einen unbeschränkten Datenaustausch zwischen der Schnittstelle (14) und dem Einbaumodul (6) freigibt.

## Beschreibung

Die Erfindung betrifft ein Funktionsmodul für eine elektronische Zugriffskontrolle auf ein Gehäuse für elektrische Anlagen, wobei in dem Gehäuse elektronische Einbaumodule wie Steuerungsmodule, Überwachungsmodule, Schaltmodule oder dgl. angeordnet sind. Die Einbaumodule sind mit einem gemeinsamen Datenbus verbunden, wobei ein Einbaumodul über den Datenbus mit einer Schnittstelle verbunden ist. Über die Schnittstelle ist das Einbaumodul zum Austausch von Daten zugänglich.

Bei bekannten Gehäusen, insbesondere bei Schaltschränken in elektrischen Anlagen und dgl. ist eine Vielzahl von Einbaumodulen verbaut, die elektronisch über entsprechende Datenverarbeitungsprogramme zu warten sind. Über eine Schnittstelle ist ein Datenzugriff auf die einzelnen Einbaumodule möglich, um z. B. ein einzelnes Einbaumodul upzudaten und/oder Daten abzurufen, zu verändern oder zu löschen. Bei Einbaumodulen mit Mikroprozessoren sind darüber hinaus meist Firmware-Updates notwendig, um z. B. Bugs, Sicherheitslücken oder dgl. auszuräumen.

Beispielsweise muss für den Datenzugriff auf einen Schaltschrank dieser geöffnet werden, wozu die Bedienungsperson einen mechanischen Schlüssel mitführen muss. Nachteilig ist, dass die Bedienungsperson - bei Wartung mehrerer Schaltschränke - häufig unterschiedliche mechanische Schlüssel bereithalten muss. Darüber hinaus wird ein Öffnen des Schaltschrankes meist nicht protokolliert, so dass die Möglichkeit von Manipulationen gegeben ist.

Der Erfindung liegt die Aufgabe zugrunde, ein Zugriffskontrollsystem für den industriellen Einsatz zur Verfügung zu stellen, mit dem eine sichere Authentifizierung und Protokollierung einer auf den Schaltschrank zugreifenden Serviceperson mit verschiedenen Sicherheitslevel möglich ist.

Die Aufgabe wird mit einem Funktionsmodul gelöst, bei dem zwischen der Schnittstelle und dem Datenbus ein Sperrmodul vorgesehen ist, welches in einem Sperrzustand des Sperrmoduls den Verkehr auf dem Datenbus einschränkt oder unterbricht und in einem Freigabezustand des Sperrmoduls den Datenbus für einen vorzugsweise uneingeschränkten Datenaustausch zwischen der Schnittstelle und dem Einbaumodul freigibt.

Die Serviceperson muss somit für einen Zugriff auf das Gehäuse und/oder für einen Datenzugriff auf die Einbaumodule im Gehäuse das Sperrmodul in den Freigabezustand schalten. Dies erfolgt über eine Ansteuereinheit, die das als Schalter ausgebildete, insbesondere als elektronischer Schalter ausgebildete Sperrmodul betätigt. Hierzu ist das Sperrmodul über eine Steuerleitung mit der Ansteuereinheit verbunden. Die Ansteuereinheit ist vorteilhaft so ausgebildet, dass sie erst nach Überprüfung einer Authentifizierung wie z. B. eines Zugriffscodes und dessen Verifizierung das Schaltmodul betätigt. Somit kann die Serviceperson erst nach einer Authentifizierung und/oder nach Verifizierung eines Zugangscodes auf den Schaltschrank zugreifen. Vorteilhaft ist das Funktionsmodul zusammen mit der Ansteuereinheit und dem Sperrmodul als gemeinsame Baueinheit ausgebildet.

Die Ansteuereinheit umfasst insbesondere einen Mikroprozessor, der die Kommunikation zur und von der Ansteuereinheit steuert und mitgeteilte Authentifizierungen verifiziert. Derartige Mikroprozessoren legen jeweils Arbeitsprotokolle ab, anhand derer festgestellt werden kann, welche Serviceperson zu welcher Zeit, in welchem Umfang und über welchen Zeitraum auf das Gehäuse oder dessen Einbaumodule zugegriffen hat.

In einer bevorzugten Ausführungsform ist vorgesehen, der Ansteuereinheit die Authentifizierung wie z.B. einen Zugriffscode über ein Netzwerk zur Verfügung zu stellen. Hierzu wird die Ansteuereinheit mit dem Netzwerk verbunden, was drahtlos oder - bevorzugt über die Schnittstelle - per Kabel erfolgen kann. Nach Eingabe der notwendigen Zugangsdaten auf einem insbesondere mobilen PC kommuniziert die Ansteuereinheit zur Authentifizierung zweckmäßig mit dem Webserver. Nach Verifizierung der empfangenen Authentifizierung gibt die Ansteuereinheit das Sperrmodul frei. Eine insbesondere unbeschränkte Kommunikation zwischen der Schnittstelle und den Einbaumodulen ist freigeschaltet.

In Weiterbildung der Erfindung ist die Ansteuereinheit mit zumindest einem Lesegerät für eine Authentifizierung wie einen Zugriffscode verbunden. Dieses Lesegerät kann ein Kartenlesegerät, ein RFID-Lesegerät, ein NFC-Lesegerät oder dgl. Lesegerät sein. Die Funktion eines Lesegeräts kann Bestandteil der beschriebenen Erfindung sein.

Es kann auch vorteilhaft sein, die Ansteuereinheit mit einem Schlüsselschalter zu verbinden. Der Schlüsselschalter dient der Authentifikation, wobei nach Betätigung des Schlüsselschalters die Ansteuereinheit das Sperrmodul in den Freigabezustand schaltet.

In Weiterbildung der Erfindung ist vorgesehen, die Ansteuereinheit über eine Steuerleitung mit einer elektromechanischen Verriegelungsvorrichtung für eine Tür des Gehäuses zu verbinden. So kann über das erfindungsgemäße Funktionsmodul auch eine mechanische Zugriffskontrolle für den manuellen Zugang zu den Einbaumodulen im Gehäuse gewährt werden, so dass nur bestimmten, qualifizierten Servicepersonen ein mechanischer Zugang eröffnet wird.

Es kann vorgesehen sein, die Schnittstelle innerhalb des Gehäuses und/oder außerhalb des Gehäuses vorzusehen. Eine externe Schnittstelle kann in einer Wand des Gehäuses, vorzugsweise in einer Seitenwand des Gehäuses vorgesehen sein. Dies wird in einfacher Weise durch den Einbau entsprechender, von außen zugänglicher Einbaubuchsen wie SUB-D, RJ45, USB oder dgl. Buchsen ermöglicht.

In Weiterbildung der Erfindung ist zweckmäßig vorgesehen, den Freigabezustand und/oder den Sperrzustand des Sperrmoduls über eine insbesondere optische Anzeige anzuzeigen.

Weitere Merkmale der Erfindung ergeben sich aus den weiteren Ansprüchen, der Beschreibung und der Zeichnung, in der nachfolgend im Einzelnen beschriebene Ausführungsbeispiele wiedergegeben sind. Es zeigen:
- Fig. 1: in schematischer Darstellung ein Gehäuse zur Aufnahme von Einbaumodulen am Beispiel eines Schaltschrankes,
- Fig. 2: in vergrößerter Darstellung schematisch den Innenraum des Gehäuses nach Fig. 1 mit angeordneten Einbaumodulen und dem erfindungsgemäßen Funktionsmodul,
- Fig. 3: in vergrößerter schematischer Darstellung ein weiteres Ausführungsbeispiel des Funktionsmoduls gemäß der Erfindung.

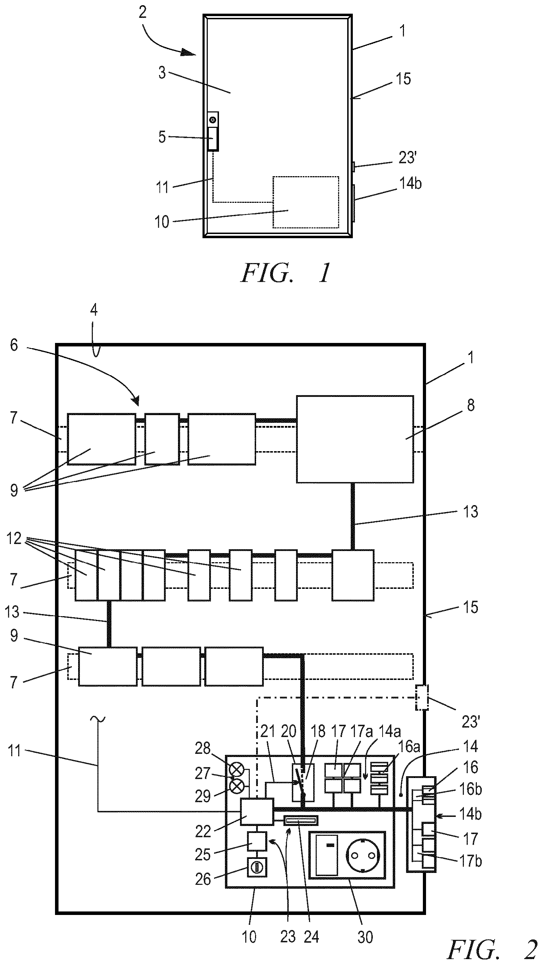

In Fig. 1 ist schematisch ein Gehäuse 1 dargestellt, welches im gezeigten Ausführungsbeispiel ein Schaltschrank 2 ist. Derartige Schaltschränke 2 werden in der Elektrotechnik bei der Installation von elektrischen Anlagen und dgl. verwendet, um darin elektronische Einbaumodule 6 unterschiedlichen Aufbaus anzuordnen und elektrisch zu verdrahten. Die Einbaumodule 6 können aus einem oder mehreren Steuerungsmodulen 8, Überwachungsmodulen 9, Schaltmodulen 12 und dgl. oder ähnlichen Modulen bestehen. Die Einbaumodule 6 sind für einen Datenzugriff ausgebildet.

Der Schaltschrank nach Fig. 1 weist eine durch eine Tür 3 verschlossene Zugangsöffnung 4 (Fig. 2) auf. Die Tür 3 ist mit einer Verriegelungsvorrichtung 5 versehen, um nach einem Schließen der Tür 3 den Schaltschrank 2 mechanisch abzuschließen. Im gezeigten Ausführungsbeispiel ist die Verriegelungsvorrichtung 5 als elektromechanische Verriegelungsvorrichtung ausgebildet. Die elektromechanische Verriegelungsvorrichtung 5 wird von einer Steuerleitung 11 angesteuert, die die Verriegelungsvorrichtung 5 mit einem Funktionsmodul 10 für eine Zugriffskontrolle, insbesondere mit einer Ansteuervorrichtung 22 (Fig. 2) verbindet.

Das geöffnete Gehäuse 1 mit der Zugangsöffnung 4 ist in Fig. 2 schematisch wiedergegeben. Auf der Rückwand des Gehäuses 1 sind Halteschienen 7 befestigt. Die Halteschienen 7 dienen in an sich bekannter Weise zur Halterung von Einbaumodulen 6 wie z. B. Steuerungsmodulen 8, Überwachungsmodulen 9, Schaltmodulen 12 und dgl. Die Einbaumodule 6, im Ausführungsbeispiel das Steuerungsmodul 8, die Überwachungsmodule 9 und die Schaltmodule 12, sind über einen insbesondere gemeinsamen Datenbus 13 miteinander verbunden. Der Datenbus 13 verbindet eine Schnittstelle 14 mit den Einbaumodulen 6 und ermöglicht eine Kommunikation jedes einzelnen Einbaumoduls mit der Schnittstelle 14.

Die Schnittstelle 14 kann als interne Schnittstelle 14a innerhalb des Gehäuses 1 angeordnet sein. Die interne Schnittstelle 14a ist nur nach Öffnen des Gehäuses 1 zugänglich. Zweckmäßig kann eine externe Schnittstelle 14b sein, welche - wie in den Figuren 1 und 2 angedeutet - z. B. in einer Seitenwand 15 des Gehäuses 1 vorgesehen sein kann. Die externe Schnittstelle 14b ist bei geschlossenem Gehäuse 1 von außen zugänglich.

Die Schnittstellen 14 können als USB-Schnittstelle, als RJ45-Schnittstelle, als Sub-D oder dgl. ausgebildet sein. Im gezeigten Ausführungsbeispiel sind sowohl bei der internen Schnittstelle 14a als auch bei der externen Schnittstelle 14b USB-Schnittstellen 16a und 16b vorgesehen. Die USB-Schnittstellen 16a, 16b sind als an sich bekannte USB-Buchsen 16 ausgebildet.

Die interne Schnittstelle 14a und/oder die externe Schnittstelle 14b kann ferner RJ45-Schnittstellen 17a und 17b aufweisen. Vorteilhaft sind die RJ45-Schnittstellen 17a und 17b als RJ45-Buchsen 17 ausgebildet.

Grundsätzlich ist eine einzelne USB-Buchse 16 bzw. eine einzelne RJ45-Buchse 17 als interne Schnittstelle 14a und/oder externe Schnittstelle 14b ausreichend. Im gezeigten Ausführungsbeispiel weist die interne Schnittstelle 14a vier RJ45-Schnittstellen 17a und drei USB-Schnittstellen 16a auf. Die externe Schnittstelle weist zwei USB-Schnittstellen 16b und drei RJ45-Schnittstellen 17b auf.

Im gezeigten Ausführungsbeispiel ist sowohl eine interne Schnittstelle 14a als auch eine externe Schnittstelle 14b vorgesehen. Es kann ausreichend sein, nur eine interne Schnittstelle 14a oder eine externe Schnittstelle 14b vorzusehen.

Die Einbaumodule 6 des Gehäuses 1 sind über den Datenbus 13 mit der Schnittstelle 14 verbunden. Zwischen der Schnittstelle 14 und dem Datenbus 13 ist ein Sperrmodul 20 vorgesehen. Das Sperrmodul 20 ist im gezeigten Ausführungsbeispiel als Schalter 18 ausgebildet, insbesondere als elektronischer Schalter ausgebildet.

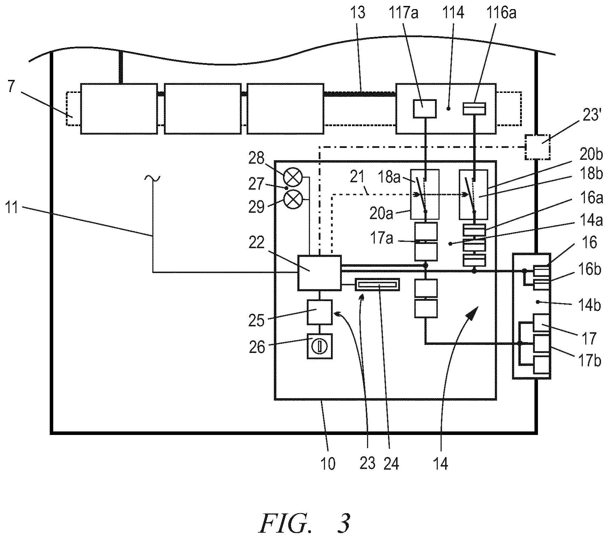

In den gezeigten Ausführungsbeispielen nach den Figuren 2 und 3 sind die Sperrmodule 20, 20a und 20b im Sperrzustand gezeigt. Im Sperrzustand ist der Schalter 18, 18a, 18b offen, so dass ein Datenaustausch zwischen der Schnittstelle 14 und einem oder mehreren der Einbaumodule 6 unterbrochen ist. Im Sperrzustand des Sperrmoduls 20 ist über die Schnittstelle 14 kein Datenaustausch mit den Einbaumodulen 6 möglich. Das Sperrmodul liegt stromlos im Sperrzustand, so dass bei Stromausfall der Datenzugriff auf die Einbaumodule 6 gesperrt ist.

Das Sperrmodul 20 wird über eine Steuerleitung 21 von einer Ansteuereinheit 22 angesteuert, um den Schaltzustand zu ändern. Vorteilhaft ist die Ansteuereinheit 22 zur Überprüfung einer Authentifizierung wie z. B. eines Zugriffcodes ausgebildet.

Die beispielhaft in Form eines Zugriffscodes erfolgende Authentifizierung kann der Ansteuereinheit 22 über eine Netzwerkverbindung, insbesondere eine LAN-Verbindung, zur Verfügung gestellt werden. Eine LAN-Verbindung kann in einfacher Weise über eine externe oder interne RJ45-Buchse 17 hergestellt werden.

Vorzugsweise ist vorgesehen, dass unabhängig vom Schaltzustand des Sperrmoduls 20 über die interne Schnittstelle 14a und/oder die externe Schnittstelle 14b ein Datenzugriff auf die Ansteuereinheit 22 freigegeben ist. So kann - sowohl im Sperrzustand des Sperrmoduls 20 als auch im Freigabezustand des Sperrmoduls 20 - die Ansteuereinheit 22 über eine drahtgebundene oder drahtlose Netzwerkverbindung mit einem Webserver kommunizieren. Übermittelt der Webserver - nach Eingabe von Zugangsdaten von einer Serviceperson - eine zulässige Authentifizierung an die Ansteuereinheit 22, wird diese den Schalter 18 schließen und das Sperrmodul 20 in den Freigabezustand überführen. Der Freigabezustand des Sperrmoduls 20 ist in Fig. 2 strichliert angedeutet.

Empfängt somit die Ansteuereinheit 22 eine zulässige Authentifizierung, beispielsweise einen Zugriffscode, wird über die Steuerleitung 21 das Sperrmodul 20 betätigt; der Schalter 18 wechselt von dem Sperrzustand in den Freigabezustand, welcher strichliert angedeutet ist. In dem Freigabezustand ist der Datenbus 13 mit der Schnittstelle 14 verbunden, so dass ein Datenaustausch zwischen der Schnittstelle 14 und einem oder mehreren der Einbaumodule 6 möglich ist. Ein über die Schnittstelle 14 angeschlossenes Servicegerät, z. B. ein Laptop oder dgl., kann die Daten der Einbaumodule 6 abrufen, verändern oder löschen und/oder den in einem Einbaumodul verbauten Mikroprozessor mit Firmware updaten und/oder gespeicherte Protokolldaten abrufen.

Neben der Übermittlung einer Authentifizierung per Netzwerkverbindung an die Ansteuereinheit 22 kann die Authentifizierung zusätzlich oder alternativ über ein Lesegerät 23 der Ansteuereinheit 22 übermittelt werden. Hierzu ist die Ansteuereinheit 22 mit zumindest einem Lesegerät 23 verbunden. Das Lesegerät kann ein Kartenlesegerät 24 und/oder ein RFID-Lesegerät 25 sein. Auch andere Typen von Lesegeräten, z. B. ein NFC-Lesegerät (Near Field Communication), sind zweckmäßig.

In einer einfachen Ausführungsform kann die Ansteuereinheit 22 mit einem Schlüsselschalter 26 verbunden sein, der - durch Schließen einer oder mehrerer Kontakte - eine entsprechende Authentifizierung an die Ansteuereinheit 22 abgibt.

Es kann zweckmäßig sein, den Schaltzustand des Sperrmoduls 20 anzuzeigen, wozu eine Anzeige 27 vorgesehen sein kann. Im gezeigten Ausführungsbeispiel ist eine optische Anzeige aus einer Zustandsanzeige für den Schaltzustand des Schalters 18 vorgesehen. So kann eine erste LED 28 den Sperrzustand und eine zweite LED 29 den Freigabezustand des Sperrmoduls 20 signalisieren.

Die interne Schnittstelle 14a und/oder die externe Schnittstelle 14b, das Sperrmodul 20, die Ansteuereinheit 22 mit den Lesegeräten 23 und/oder dem Schlüsselschalter 26 sowie die Anzeige 27 sind bevorzugt in einem gemeinsamen Funktionsmodul 10 angeordnet, welches in das Gehäuse 1 bzw. den Schaltschrank 2 einzubauen ist. Da alle für die Funktion notwendigen Elemente im Funktionsmodul 10 in einer gemeinsamen Baueinheit angeordnet sind, kann das Funktionsmodul 10 in einem Gehäuse, Schaltschrank oder dgl. ohne großen Verdrahtungsaufwand eingebaut werden. Das Funktionsmodul 10 ist insbesondere zum Nachrüsten bestehender Schaltschränke 2 geeignet.

Die Ansteuereinheit 22 kann ferner über die Steuerleitung 11 die elektromechanische Verriegelungsvorrichtung 5 der Tür 3 des Schaltschrankes 2 entriegeln. Zum Öffnen des Schaltschrankes 2 schließt eine Serviceperson ein Servicegerät (mobiler PC oder dgl.) über eine externe Schnittstelle 14b an und kommuniziert mit der Ansteuereinheit 22, die unabhängig vom Schaltzustand des Sperrmoduls 20 über eine Datenverbindung zugänglich ist. Nach Übermittlung einer zulässigen Authentifizierung entriegelt die Ansteuereinheit 22 die Verriegelungsvorrichtung 5, so dass der Schaltschrank 2 geöffnet und alle Einbaumodule 6 für einen Service mechanisch frei zugänglich sind.

Um ohne Öffnen des Schaltschranks 2 das Sperrmodul 20 betätigen zu können, kann vorgesehen sein, z. B. in der Seitenwand 15 des Gehäuses ein Lesegerät 23' anzuordnen, welches z. B. als RFID-Lesegerät, NFC-Lesegerät oder dgl. kontaktloses Lesegerät ausgebildet sein kann. Eine Serviceperson stellt mit einem Servicegerät, z. B. einem PC, eine Verbindung mit der externen Schnittstelle 14b her und identifiziert sich über einen entsprechenden Chip oder dgl. Identifizierungselement am Lesegerät 23'. Die Ansteuereinheit 22 wird - nach Verifizierung einer zulässigen Authentifizierung - das Sperrmodul 20 in den Freigabezustand überführen; die Serviceperson kann ohne Öffnung des Schaltschrankes 2 notwendige Servicearbeiten ausführen.

Im Ausführungsbeispiel nach Fig. 2 ist der Datenbus 13 selbst über das Sperrmodul 20 mit den Schnittstellen 14 verbunden. Im Ausführungsbeispiel nach Fig. 3 mündet der Datenbus 13 in eine oder mehrere fixe Schnittstellen 114, wie in Fig. 3 dargestellt. Diese Schnittstellen können z. B. eine RJ45-Schnittstelle 117a oder eine USB-Schnittstelle 116a sein.

Ferner ist im Ausführungsbeispiel nach Fig. 2 ein Netzanschluss 30 zur Spannungsversorgung eines Servicegerätes, z. B. einen mobilen PC vorgesehen. Insbesondere ist der Netzanschluss 30 - zweckmäßig zusammen mit einem Sicherungsautomaten - in das Funktionsmodul 10 integriert.

Das Funktionsmodul 10 nach Fig. 3 ist derart ausgebildet, dass die RJ45-Schnittstelle 117a über ein erstes Sperrmodul 20a auf die interne Schnittstelle 17a schaltbar ist, während die USB-Schnittstelle 116a über ein Sperrmodul 20b auf die interne USB-Schnittstelle 16a geschaltet ist. Entsprechend der Darstellung in Fig. 2 ist die vorgesehene Schnittstelle 14 entweder eine interne Schnittstelle 14a und/oder eine externe Schnittstelle 14b. Sowohl die interne RJ45-Schnittstelle 17a als auch die externe RJ45-Schnittstelle 17b sind über eine Datenleitung unmittelbar mit der Ansteuereinheit 22 verbunden, so dass - unabhängig von dem Schaltzustand des Sperrmoduls 20a - sowohl über die interne RJ45-Schnittstelle 17a als auch über die externe RJ45-Schnittstelle 17b ein unmittelbarer Datenzugriff auf die Ansteuereinheit 22 gegeben ist.

Entsprechend sind - insbesondere über getrennte Datenleitungen - die interne USB-Schnittstelle 16a bzw. die externe USB-Schnittstelle 16b unabhängig von dem Schaltzustand des Sperrmoduls 20b mit der Ansteuereinheit 22 verbunden.

Der weitere Aufbau des Funktionsmoduls 10 entspricht dem nach Fig. 2, weshalb für gleiche Teile gleiche Bezugszeichen verwendet sind.

Im Ausführungsbeispiel nach Fig. 3 kann die interne RJ45-Schnittstelle 17a und/oder die externe RJ45-Schnittstelle 17b getrennt von einer Aktivierung der USB-Schnittstellen 16a, 16b aktiviert werden. Entsprechend ist eine Aktivierung der internen USB-Schnittstelle 16a und der externen USB-Schnittstelle 16b unabhängig von den RJ45-Schnittstellen 17a und 17b möglich.

Das Funktionsmodul 10 nach Fig. 3 ist insbesondere als Nachrüstsatz für bestehende Schaltschränke vorteilhaft. Es kann auch zweckmäßig sein, über die Schnittstelle einen beschränkten Datenzugriff auf die Ansteuereinheit zuzulassen. Unabhängig von dem Sperrzustand oder dem Freigabezustand des Sperrmoduls, kann dann zumindest die elektromechanische Verriegelung der Tür des Gehäuses bedient werden.

## Patentansprüche

1. Funktionsmodul für eine elektronische Zugriffskontrolle auf ein Gehäuse (1) in elektrischen Anlagen, mit in dem Gehäuse (1) angeordneten elektronischen Einbaumodulen (6) wie Steuerungsmodulen (8), Überwachungsmodulen (9), Schaltmodulen (12) und dgl., wobei zumindest eines der Einbaumodule (6) mit einem Datenbus (13) verbunden ist, und das Einbaumodul (6) über den Datenbus (13) mit einer Schnittstelle (14) verbunden ist, wobei das Einbaumodul (6) über die Schnittstelle (14) zum Austausch von Daten zugänglich ist,
**dadurch gekennzeichnet, dass** zwischen der Schnittstelle (14) und dem Datenbus (13) ein Sperrmodul (20, 20a, 20b) vorgesehen ist, und das Sperrmodul (20, 20a, 20b) in einem Sperrzustand den Datenverkehr auf dem Datenbus (13) für zumindest einen Datenaustausch zwischen der Schnittstelle (14) und dem Einbaumodul (6) einschränkt oder unterbricht und in einem Freigabezustand den Datenbus (13) für einen freien Datenaustausch zwischen der Schnittstelle (14) und dem Einbaumodul (6) freischaltet.

2. Funktionsmodul nach Anspruch 1,
**dadurch gekennzeichnet, dass** das Sperrmodul (20, 20a, 20b) als Schalter (18a, 18a, 18b) ausgebildet ist.

3. Funktionsmodul nach Anspruch 2,
**dadurch gekennzeichnet, dass** der Schalter (18a, 18a, 18b) ein elektronischer Schalter (20, 20a, 20b) ist.

4. Funktionsmodul nach Anspruch 1,
**dadurch gekennzeichnet, dass** das Sperrmodul (20, 20a, 20b) über eine Steuerleitung (21) einer Ansteuereinheit (22) angesteuert ist, wobei die Ansteuereinheit (22) zur Überprüfung einer Authentifizierung ausgebildet ist.

5. Funktionsmodul nach Anspruch 1,
**dadurch gekennzeichnet, dass** das Sperrmodul (20, 20a, 20b) über eine Steuerleitung (21) einer Ansteuereinheit (22) angesteuert ist, und der Ansteuereinheit (22) eine Authentifizierung über eine Netzwerkverbindung zur Verfügung gestellt ist, insbesondere über einen Webserver zur Verfügung gestellt ist.

6. Funktionsmodul nach Anspruch 4,
**dadurch gekennzeichnet, dass** die Ansteuereinheit (22) mit zumindest einem Lesegerät (23) für eine Authentifizierung verbunden ist.

7. Funktionsmodul nach Anspruch 4,
**dadurch gekennzeichnet, dass** die Ansteuereinheit (22) mit einem Lesegerät (23) verbunden ist, das als Kartenlesegerät (24), als RFID Lesegerät (25) oder dgl. Lesegerät ausgebildet ist.

8. Funktionsmodul nach Anspruch 4,
**dadurch gekennzeichnet, dass** die Ansteuereinheit (22) mit einem Schlüsselschalter (26) verbunden ist.

9. Funktionsmodul nach Anspruch 4,
**dadurch gekennzeichnet, dass** die Ansteuereinheit (22) über eine Steuerleitung (11) mit einer Verriegelungsvorrichtung (5) für eine Tür (3) des Gehäuses (1) verbunden ist.

10. Funktionsmodul nach Anspruch 1,
**dadurch gekennzeichnet, dass** unabhängig von dem Sperrzustand oder dem Freigabezustand des Sperrmoduls (20, 20a, 20b) über die Schnittstelle (14) ein zumindest beschränkter Datenzugriff auf die Ansteuereinheit (22) gegeben ist.

11. Funktionsmodul nach Anspruch 1,
**dadurch gekennzeichnet, dass** die Schnittstelle (14) innerhalb des Gehäuses (1) ausgebildet ist.

12. Funktionsmodul nach Anspruch 1,
**dadurch gekennzeichnet, dass** die Schnittstelle (14) von außerhalb des Gehäuses (1) zugänglich ist.

13. Funktionsmodul nach Anspruch 1,
**dadurch gekennzeichnet, dass** das Gehäuse (1) ein Schaltschrank (2) ist.

14. Funktionsmodul nach Anspruch 1,
**dadurch gekennzeichnet, dass** der Freigabezustand und/oder der Sperrzustand des Sperrmoduls (20, 20a, 20b) über eine insbesondere optische Anzeige (27) angezeigt ist.
